# EUROPÄISCHE PATENTSCHRIFT

(11) **EP 0 921 326 B1**
(45) Veröffentlichungstag und Bekanntmachung des Hinweises auf die Patenterteilung: **04.06.2003**
(21) Anmeldenummer: 98810882.5
(22) Anmeldetag: 04.09.1998
(51) Int. Cl.: F16B 13/08

(54) **Einschlagdübel**
Driven-in dowel
Cheville à enfoncer

(30) Priorität: 10.10.1997 DE 19744727
(43) Veröffentlichungstag der Anmeldung: 09.06.1999
(73) Patentinhaber: HILTI Aktiengesellschaft, 9494 Schaan (LI)
(72) Erfinder: Lins, Reinhard, 9475 Sevelen (DE); Wisser, Erich, 6900 Bregenz (DE); Gassner, Helmut, 9497 Triesenberg (DE); Kossian, Susanne, 6800 Feldkirch (DE); Werner, Michael, 81245 München (DE)
(74) Vertreter: Wildi, Roland

(56) Entgegenhaltungen:
- EP-A- 0 007 386
- FR-A- 1 010 775
- GB-A- 2 109 886
- US-A- 2 171 985

## Beschreibung

Die Erfindung betrifft einen Einschlagdübel gemäss dem Oberbegriff des Patentanspruchs 1.

Die Verankerung der bekannten Einschlagdübel beruht meist auf dem Spreizprinzip. Die dafür eingesetzten Schlagspreizdübel sind meist zweiteilig aufgebaut und umfassen beispielsweise einen hülsenförmigen Dübelkörper mit einer konischen Bohrung und ein Spreizelement. Zur Verankerung in einem vorbereiteten Bohloch wird das Spreizelement durch Hammerschläge in den Spreizbereich des hülsenförmigen Dübelkörpers eingetrieben. Dadurch wird der Speizbereich radial aufgeweitet und kraftschlüssig gegen die Wandung des Bohrloches gepresst. Die Mehrteiligkeit dieser bekannten Schlagspreizdübel kann zu Problemen führen. Beispielsweise kann das Spreizelement falsch in die Bohrung des Dübelkörpers eingesetzt werden. Auch kann das Spreizelement aus der Bohrung herausfallen und verloren gehen. Bei Varianten mit ausserhalb der Bohrung angeordnetem und gehaltenem Spreizelement kann es vorkommen, dass sich das Spreizelement beim Überschlagen des Dübelkörpers schräg stellt und verkantet.

Es sind auch Einschlagdübel bekannt, bei denen die Verankerung im Bohrloch durch eine Relatiwerschiebung von zwei konzentrisch angeordneten Hülsen erfolgt. In der U.S. Patentschrift Nr. US-A-2,171,985 ist ein Schlagspreizdübel beschrieben, der aus einer sich am Bohrlochgrund abstützenden inneren Hülse mit einem Innengewinde und einer darüber treibbaren Spreizhülse besteht. Am vorderen Endbereich der inneren Hülse ist ein sich in Setzrichung konisch erweiternder Abschnitt vorgesehen. Die Spreizhülse weist durch Längsschlitze voneinander getrennte Spreizlappen auf, die durch schlagendes Auftreiben der äusseren Hülse auf den konischen Abschnitt der inneren Hülse radial ausstellbar sind. Die Verankerung des Einschlagdübels erfolgt durch die Spreizkraft, die von den radial ausgestellten Spreizlappen auf die Bohrlochwandung ausgeübt wird.

Die Verankerung nach dem Spreizprinzip erfordert hohe Spreizkräfte. Dies führt zu grossen Achs- und Randabständen für die erstellten Befestigungspunkte. Da diese Abstände nicht immer eingehalten werden können, sind neben den auf dem Spreizprinzip beruhenden Einschlagdübeln auch Systeme bekannt, die im wesentlichen durch eine formschlüssige Verbindung in einem Bohrloch verankert werden. Derartige Systeme beruhen auf einer Hinterschneidung, die üblicherweise im Bereich des Bohrlochgrunds angeordnet ist. Die Verankerung erfolgt über Speizlappen, die an einem hülsenförmigen Dübelkörper vorgesehen sind und radial in die Hinterschneidung ausgestellt werden, um den Formschluss herzustellen. Bei der Mehrzahl der bekannten, formschlüssig verankernden Hinterschnittsysteme ist es erforderlich, zunächst in einem zusätzlichen Arbeitsschritt mit einem Spezialwerkzeug in exakt definierter Tiefe des Bohrlochs eine Hinterschneidung herzustellen. Erst danach kann der Hinterschnittdübel in das Bohrloch eingesetzt werden und durch schlagendes Auftreiben der Spreizlappen seiner Hülse auf ein Konusteil formschlüssig verankert werden.

Es sind auch selbstschneidende Hinterschnittsysteme bekannt, bei denen sich der Hinterschnittdübel beim Setzvorgang schlagend und tangential schabend selbsttätig eine Hinterschneidung schafft. Zwar ist es mit den bekannten selbstschneidenden Hinterschnittsystemen innerhalb einer akzeptablen Zeitspanne möglich, eine formschlüssige Verbindung herzustellen. Allerdings sind derartige Hinterschnittsysteme für kleinere Lastbereiche mit Zuglasten kleiner als 20kN zu aufwendig.

Alternativ zu den selbstschneidenden Hinterschnittsystemen sind auch Hinterpressdübel bekannt, die eine Zwischenstellung zwischen den Schlagspreizdübeln und den Hinterschnittdübeln einnehmen, indem sie durch radiale Aufweitung von Spreizelementen einen formschlüssigen Eingriff in die Bohrlochwandung hineinpressen. Hinterpressdübel erzeugen den formschlüssigen Eingriff durch Volumensverdrängung. Ab 1 mm Einpresstiefe steigt die erforderliche Presskraft überproportional an, da das zu verdrängende Volumen zumindest quadratisch zunimmt. Dies führt zu einer Vorschädigung des Wandmaterials und zu einer Herabsetzung der Anfangssteifigkeit des Hinterpressdübels. Bei Einpresstiefen von etwa 5 mm kann bereits Betonspalten auftreten, was die Tragfähigkeit erheblich verringert.

Aufgabe der vorliegenden Erfindung ist es daher, diesen Nachteilen des Stands der Technik abzuhelfen. Es soll ein Einschlagdübel geschaffen werden, der auf einfache Weise formschlüssig im Untergrund verankerbar ist. Aufwendige Spezialwerkzeuge für die Herstellung einer Hinterschneidung sollen entfallen können. Der für die Verankerung erforderliche Energieaufwand soll relativ gering sein und soll insbesondere sehr einfach mittels axialen Schlägen eines Hammers bewerkstelligbar sein. Dabei soll es möglich sein, auch grössere Hinterschnittiefen von 5mm und grösser zu erzielen, ohne dass der Energieaufwand mit steigender Tiefe der Hinterschneidung überproportional anwächst. Der Einschlagdübel soll risstauglich sein und ein Nachspreizverhalten zeigen. Seine Konstruktion soll einfach und kostengünstig sein. Dabei soll der Einschlagdübel für den Anwender selbsterklärend sein.

Die Lösung dieser Aufgaben besteht in einem Einschlagdübel mit den im kennzeichnenden Abschnitt des Patentanspruchs 1 angeführten Merkmalen. Der erfindungsgemässe Einschlagdübel besteht aus einer inneren Hülse, die mit einem Lastangriffsmittel, insbesondere einem Innengewinde ausgestattet ist und an ihrem vorderen Bereich einen in Setzrichtung konisch erweiterten Abschnitt aufweist, und einer koaxial angeordneten äusseren Hülse, die an ihrem vorderen Bereich durch Längsschlitze voneinander getrennte Spreizlappen aufweist. Die Spreizlappen sind durch schlagendes Auftreiben der äusseren Hülse auf den konisch erweiterten Abschnitt der inneren Hülse radial ausstellbar und weisen im wesentlichen ringförmig angeordnete, meisselartige Schneiden auf. Im Anschluss an den konisch erweiterten Abschnitt der inneren Hülse ist ein im wesentlichen zylindrischer Stützabschnitt vorgesehen, dessen Aussendurchmesser kleiner ist als der grösste Aussendurchmesser des konisch erweiterten Abschnitts.

Die meisselartigen Schneiden an den Spreizlappen bauen bei jedem axialen Schlag Material von der Bohrlochwandung ab. Indem vom konisch erweiterten Abschnitt der inneren Hülse ein zylindrischer Stützabschnitt abragt, dessen Durchmesser kleiner ist als der Aussendurchmesser des konisch erweiterten Abschnitts, kann das abgebaute Material zum Bohrlochgrund ausweichen. Auf diese Weise muss es durch die radial aufgeweiteten Spreizlappen nicht mehr verdrängt und/oder durch Pressung weiter zerkleinert werden und es behindert den weiteren Abbau von Material von der Bohrlochwandung nicht. Die meisselartigen Schneiden sind im wesentlichen ringförmig angeordnet und greifen über den gesamten Umfang der äusseren Hülse an der Bohrlochwandung an. Die zwischen den Spreizlappen vorgesehenen Längsschlitze bilden eine nur unwesentliche Unterbrechung der ringförmigen Schneiden. Dadurch platzt das abgebaute Material schalenförmig ab.

Der Stützabschnitt weist mit Vorteil eine axiale Länge auf, die etwa das 2-fache bis 5-fache der Wandstärke der äusseren Hülse beträgt. Das durch die meisselnde Bearbeitung ringförmig von der Bohrlochwandung abplatzende Material findet unterhalb des konisch erweiterten Abschnitts der inneren Hülse genügend Raum vor. Den meisselartigen Schneiden bietet sich an der Bohrlochwandung jeweils nur ein linearer Angriffsbereich. Daher steigt der Energieaufwand für die Erstellung der Hinterschneidung nur linear mit deren Tiefe.

Aus fertigungstechnischen Gründen ist es von Vorteil, wenn der Aussendurchmesser des Stützabschnitts dem Aussendurchmesser der inneren Hülse im Bereich vor dem konisch erweiterten Abschnitt entspricht. Der konisch erweiterte Abschnitt kann beispielsweise durch Stauchen der inneren Hülse erzeugt werden.

Zur besseren Führung des Einschlagdübels beim Einsetzen in ein Bohrloch weist die äussere Hülse einen Aussendurchmesser auf, der dem grössten Durchmesser des konisch erweiterten Abschnitts der inneren Hülse entspricht.

Der konisch erweiterte Abschnitt der inneren Hülse besitzt eine Länge, die etwa das 2-fache bis 4-fache der Wandstärke der äusseren Hülse beträgt, und weist einen mittleren Konuswinkel von etwa 15° bis etwa 60° auf. Auf diese Weise ausgebildet, sind mit dem Einschlagdübel Hinterschnittiefen zu erzielen, die etwa das 1-fache bis 2-fache der Wandstärke der äusseren Hülse betragen, wobei die erforderlichen Eintreibenergien moderat bleiben und beispielsweise durch Hammerschläge auf das im Ausgangszustand gegenüber der inneren Hülse überstehende rückwärtige Ende der äusseren Hülse aufgebracht werden können. Die Spreizlappen besitzen vorzugsweise eine Länge, die etwa das 2-fache bis 4-fache der Wandstärke der äusseren Hülse beträgt. Bei diesen Längen und den üblichen Wandstärken der äusseren Hülse von etwa 1 mm bis etwa 3 mm ist gewährleistet, dass sich die Spreizlappen bei der meisselnden Erstellung der Hinterschneidung nicht verformen. Zusätzlich können die Spreizlappen bzw. insbesondere die Schneidenbereiche auch einem Härtungsprozess unterzogen sein.

Die meisselartigen Schneiden sind jeweils von einer Freifläche und von einer Meisselfläche begrenzt, die miteinander einen Schneidenwinkel von etwa 30° bis etwa 90° einschliessen, wobei die Freifläche in die Aussenfläche des Spreizlappens einmündet und die Meisselfläche sich zur Rückseite des Spreizlappens erstreckt. Bei den gewählten Schneidenwinkeln ist eine gutes Schneidverhalten der Schneiden gegeben, ohne Gefahr zu laufen, dass die Schneiden unter Zugbeanspruchung des Einschlagdübels einer grösseren Verformung unterliegen.

Die Freifläche verläuft gegenüber der Längsachse der äusseren Hülse um einen Meisselwinkel von etwa 120° bis etwa 175° geneigt. Der Neigungswinkel der Freifläche und der Schneidenwinkel gewährleisten, dass die Meisselkraft zur Bohrlochwandung hingeleitet und die zur Meisselrichtung parallele Krafteinleitungsfläche nicht vorgeschädigt wird. Bei Zugbelastung des Einschlagdübels kann der Beton dort immer noch hohe Flächenpressungen aufnehmen.

Für eine möglichst gute Übereinstimmung des Verlaufs der Schneidkurve und der von den auf die Schneiden folgenden Abschnitten der Spreizlappen beschriebenen Schleppkurve ist die Aussenfläche der Spreizlappen torisch konkav bzw. als Sattelfläche ausgebildet. Dadurch ergibt sich für die Spreizlappen unter Zugbelastung des Einschlagdübels eine möglichst gute flächige Anlage. Die lokale Flächenpressung kann auf diese Weise relativ gering gehalten werden.

Im folgenden wird der Einschlagdübel unter Bezugnahme auf ein in den Figuren schematisch dargestelltes Ausführungsbeispiel näher erläutert. Es zeigen:
Fig. 1 einen Axialschnitt des Einschlagdübels im Ausgangszustand; und
Fig. 2 den Einschlagdübel aus Fig. 1 im gesetzten Zustand.

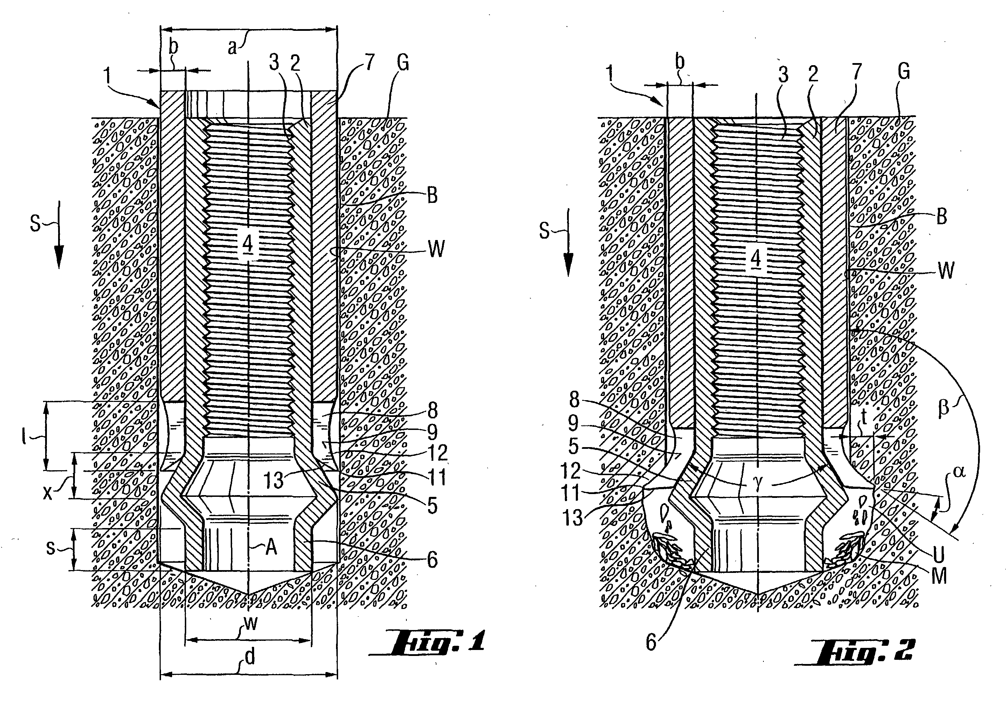

Das in den Fig. 1 und 2 schematisch dargestellte Ausführungsbeispiel des erfindungsgemässen Einschlagdübels ist gesamthaft mit dem Bezugszeichen 1 versehen. Dabei zeigt Fig. 1 den Einschlagdübel 1 in seinem Ausgangszustand, vor dem Verankern in einem Bohrloch B, das im Untergrund G, beispielsweise in Beton oder in Mauerwerk, vorbereitet ist, während der Einschlagdübel 1 in Fig. 2 im formschlüssig verankerten Zustand dargestellt ist. Der Einschlagdübel 1 umfasst eine innere Hülse 2 und eine konzentrisch angeordnete äussere Hülse 7. Die innere Hülse 2 weist eine zylindrische Durchgangsbohrung 4 auf und ist mit einem Innengewinde 3 ausgestattet, das sich über einen Grossteil seiner Länge erstreckt. In ihrem, bezogen auf die Setzrichtung S, vorderen Bereich besitzt die innere Hülse 2 einen konusförmig erweiterten Abschnitt 5. Wie in Fig. 2 angedeutet, schliesst der konusförmig erweiterte Abschnitt 5 mit der Achse A der inneren Hülse 2 einen mittleren Konuswinkel γ ein, der etwa 15° bis etwa 60° beträgt. Die bis zum grössten Aussendurchmesser des konusförmig erweiterten Abschnitts 5 gemessene axiale Länge ist mit x bezeichnet und beträgt etwa das 1-fache bis 2-fache der Wandstärke b der äusseren Hülse 7. Die Wandstärke b der äusseren Hülse 7 beträgt üblicherweise etwa 1 mm bis etwa 3 mm. An den konusförmig erweiterten Abschnitt 5 schliesst ein Stützabschnitt 6 an, dessen Aussendurchmesser w kleiner ist als der mit d bezeichnete grösste Aussendurchmesser des konusförmig erweiterten Abschnitts 5. Aus fertigungstechnischen Gründen entspricht der Aussendurchmesser w des Stützabschnitts 6 etwa dem Aussendurchmesser der inneren Hülse 2 vor dem konusförmig erweiterten Abschnitt 5. Die axiale Länge s des Stützabschnitts 6 beträgt etwa das 2-fache bis 5-fache der Wandstärke b der äusseren Hülse 7.

Die äussere Hülse 7 ist koaxial und axial verschiebbar zur inneren Hülse 2 angeordnet. Der Aussendurchmesser a der äusseren Hülse 7 entspricht etwa dem grössten Aussendurchmesser d des konusförmig erweiterten Abschittes 5 der inneren Hülse 2. An ihrem vorderen Bereich weist die äussere Hülse 7 Spreizlappen 8 auf, die durch Längsschlitze voneinander getrennt sind. Die Spreizlappen sind durch axiale Schläge auf das rückwärtige Ende der äusseren Hülse 7 auf den konusförmig erweiterten Abschnitt 5 der inneren Hülse 2 auftreibbar. Dabei werden sie um die im Bereich der rückwärtigen Enden der Längsschlitze vorgesehenen plastischen Gelenke 9 radial ausgestellt. An den gegenüberliegenden freien Vorderenden der Spreizlappen 8 sind meisselartige Schneiden 11 vorgesehen, die sich ringförmig erstrecken und nur durch die Längsschlitze voneinander getrennt sind. Jede der meisselartigen Schneiden 11 ist, wie aus Fig. 2 ersichtlich, von einer Freifläche 12, die in die Aussenseite des Spreizlappens mündet, und von einer Meisselfläche 13, die sich zur Rückseite des Spreizlappens 8 erstreckt, begrenzt. Dabei schliessen die Freifläche 12 und die Meisselfläche 13 miteinander einen Schneidenwinkel α ein, der etwa 30° bis etwa 90° beträgt. Die Freifläche 12 ist gegenüber der Längsachse A um einen Meisselwinkel β von etwa 120° bis etwa 175° nach aussen geneigt. Aus Gründen der besseren Übereinstimmung der Schneidkurve, die beim radialen Ausstellen der Schneidlappen 8 von den Schneiden 11 beschrieben werden, und der Schleppkurve, die von den an die Schneiden 11 anschliessenden Aussenbereichen der Schneidlappen 8 beschrieben werden, sind die Aussenflächen der Schneidlappen torisch konkav bzw. als Sattelflächen ausgebildet.

Vor dem Setzvorgang überragt die äussere Hülse 7 die rückwärtige Stirnfläche der inneren Hülse 2 um eine Länge, die dem Vorschubweg der äusseren Hülse 7 für ein vollständiges Aufspreizen der Spreizlappen 8 entspricht. Zur Verankerung des Einschlagdübels 1 werden auf die rückwärtige Stirnfläche der äusseren Hülse 7 axiale Schläge ausgeübt, was beispielsweise mit einem Hammer erfolgen kann. Dabei wird die äussere Hülse 7 auf den konusförmig erweiterten Abschnitt 5 der sich am Grund des vorbereiteten Bohrlochs B im Untergrund G abstützenden inneren Hülse 2 aufgetrieben. Dadurch werden die Spreizlappen 8 radial nach aussen gegen die Wandung W des Bohrlochs gepresst. Die ringförmigen Schneiden 11 an den Vorderenden der Spreizlappen bearbeiten die Bohrlochwandung W bei jedem axialen Schlag und tragen meisselnd Material ab. Der Schneidenwinkel α und der Neigungswinkel β der Freifläche leiten die Meisselkraft derart in die Bohrlochwandung W ein, dass das Material M ringförmig abplatzt. Das abgebaute Material M fällt zum Bohrlochgrund in den aufgrund des Stützabschnitts 5 bestehenden Freiraum, wie in Fig. 2 angedeutet ist. Sobald die Stirnflächen der inneren und der äusseren Hülse 2 bzw. 7 bündig sind, ist der Setzvorgang abgeschlossen und ist in die Bohrlochwandung W eine Hinterschneidung U mit der gewünschten Hinterschnittiefe t eingemeisselt. Die Bündigkeit der Stirnflächen stellt für den Anwender somit eine einfache Setzkontrolle dar. Um die gewünschte Hinterschnittiefe t zuverlässig erstellen zu können, erweist es sich als zweckmässig, wenn die axiale Länge s des Stützabschnitts 5 gleich oder grösser gewählt ist als die zweifache Hinterschnittiefe t.

## Patentansprüche

1. Einschlagdübel mit einer inneren Hülse (2), die mit einem Lastangriffsmittel, insbesondere einem Innengewinde (3) ausgestattet ist und an ihrem vorderen Bereich einen in Setzrichtung (S) konisch erweiterten Abschnitt (5) aufweist, und einer koaxial angeordneten äusseren Hülse (7), die an ihrem vorderen Bereich durch Längsschlitze voneinander getrennte Spreizlappen (8) aufweist, die durch schlagendes Auftreiben der äusseren Hülse (7) auf den konisch erweiterten Abschnitt (5) der inneren Hülse (2) radial ausstellbar sind, **dadurch gekennzeichnet, dass** die Spreizlappen (8) ringförmig angeordnete, meisselartige Schneiden (11) aufweisen und im Anschluss an den konisch erweiterten Abschnitt (5) der inneren Hülse (2) ein im wesentlichen zylindrischer Stützabschnitt (6) vorgesehen ist, dessen Aussendurchmesser (w) kleiner ist als der grösste Aussendurchmesser (d) des konisch erweiterten Abschnitts (5).

2. Einschlagdübel nach Anspruch 1, **dadurch gekennzeichnet, dass** der Stützabschnitt (6) eine axiale Länge (s) aufweist, die etwa das 2-fache bis 5-fache der Wandstärke (b) der äusseren Hülse (7) beträgt.

3. Einschlagdübel nach Anspruch 1 oder 2, **dadurch gekennzeichnet, dass** der Aussendurchmesser (w) des Stützabschnitts (5) dem Aussendurchmesser der inneren Hülse (2) im an den konisch erweiterten Abschnitt (5) anschliessenden rückwärtigen Bereich entspricht.

4. Einschlagdübel nach einem der vorangehenden Ansprüche, **dadurch gekennzeichnet, dass** die äussere Hülse (7) einen Aussendurchmesser (a) aufweist, der dem grössten Durchmesser (d) des konisch erweiterten Abschnitts (5) der inneren Hülse (2) weitgehend entspricht.

5. Einschlagdübel nach einem der vorangehenden Ansprüche, **dadurch gekennzeichnet, dass** der konisch erweiterte Abschnitt (5) der inneren Hülse (2) eine Länge (x) besitzt, die etwa das 2-fache bis 4-fache der Wandstärke (b) der äusseren Hülse (7) beträgt, und einen mittleren Konuswinkel (γ) von etwa 15° bis etwa 60° aufweist.

6. Einschlagdübel nach Anspruch 5, **dadurch gekennzeichnet, dass** die Spreizlappen (8) eine Länge (I) aufweisen, die etwa das 2-fache bis 4-fache der Wandstärke (b) der äusseren Hülse (7) beträgt.

7. Einschlagdübel nach einem der vorangehenden Ansprüche, **dadurch gekennzeichnet, dass** die meisselartigen Schneiden (11) jeweils von einer Freifläche (12) und von einer Meisselfläche (13) begrenzt sind, die miteinander einen Schneidenwinkel (α) von etwa 30° bis etwa 90° einschliessen, wobei die Freifläche (12) in die Aussenfläche des Spreizlappens (8) einmündet und die Meisselfläche (13) sich zur Rückseite des Spreizlappens (8) erstreckt.

8. Einschlagdübel nach Anspruch 7, **dadurch gekennzeichnet, dass** die Freifläche (12) gegenüber der Längsachse (A) der äusseren Hülse (7) um einen Meisselwinkel (β) von etwa 120° bis etwa 175° geneigt verläuft.

9. Einschlagdübel nach einem der vorangehenden Ansprüche, **dadurch gekennzeichnet, dass** die Aussenfläche der Spreizlappen (8) torisch konkav bzw. als Sattelfläche ausgebildet ist.

10. Einschlagdübel nach einem der vorangehenden Ansprüche, **dadurch gekennzeichnet, dass** die Wandstärke (b) der äusseren Hülse (7) etwa 1 mm bis etwa 3 mm beträgt.

## Claims

1. Driven-in dowel having an inner sleeve (2) that is equipped with a load application means, more particularly an internal thread (3), and on its frontal zone incorporates a portion (5) that has been conically broadened in the direction of placement (S), and having a coaxially disposed outer sleeve (7) that on its frontal zone incorporates expansion tabs (8) separated from one another by lengthways slots, said expansion tabs (8) being adapted to be radially splayed apart by striking the outer sleeve (7) to drive it onto the conically broadened portion (5) of the inner sleeve (2), **characterised in that** the expansion tabs (8) incorporate annularly disposed, chisel-like cutting edges (11) and arranged contiguously with the conically broadened portion (5) of the inner sleeve (2) there is a substantially cylindrical supporting portion (6) whose external diameter (w) is smaller than the maximum external diameter (d) of the conically broadened portion (5).

2. Driven-in dowel according to claim 1, **characterised in that** the supporting portion (6) has an axial length (s) that is around twice to five times the thickness (b) of the wall of the outer sleeve (7).

3. Driven-in dowel according to claim 1 or 2, **characterised in that** the external diameter (w) of the supporting portion (5) is the same as the external diameter of the inner sleeve (2) in the rearward zone that adjoins the conically broadened portion (5).

4. Driven-in dowel according to any of the preceding claims, **characterised in that** the outer sleeve (7) has an external diameter (a) that virtually the same as the maximum diameter (d) of the conically broadened portion (5) of the inner sleeve (2).

5. Driven-in dowel according to any of the preceding claims, **characterised in that** the conically broadened portion (5) of the inner sleeve (2) has a length (x) that is around twice to four times the thickness (b) of the wall of the outer sleeve (7), and exhibits a median cone angle (γ) of around 15° to around 60°.

6. Driven-in dowel according to claim 5, **characterised in that** the expansion tabs (8) have a length (I) that is around twice to four times the thickness (b) of the wall of the outer sleeve (7).

7. Driven-in dowel according to any of the preceding claims, **characterised in that** the chisel-like cutting edges (11) are in each case delimited by a free surface (12) and by a chisel surface (13) which together enclose a cutting edge angle (α) of around 30° to around 90°, the free surface (12) opening out into the external surface of the expansion tab (8) and the chisel surface (13) extending as far as the rear of the expansion tab (8).

8. Driven-in dowel according to claim 7, **characterised in that** the free surface (12) is inclined by a chisel angle (β) of around 120° to around 175° relative to the longitudinal axis (A) of the outer sleeve (7).

9. Driven-in dowel according to any of the preceding claims, **characterised in that** the external surface of the expansion tabs (8) is in the form of a concave torus or a saddle.

10. Driven-in dowel according to any of the preceding claims, **characterised in that** the thickness (b) of the wall of the outer sleeve (7) is around 1 mm to around 3 mm.

## Revendications

1. Cheville à enfoncer, comprenant un manchon intérieur (2), qui est muni de moyens d'application de charge, en particulier d'un taraudage (3) et comporte dans sa zone avant une portion (5) à élargissement conique dans la direction de scellement (S), et comprenant un manchon extérieur disposé coaxialement (7) qui comporte, dans sa zone avant, des pattes expansibles (8) qui sont séparées les unes des autres par des fentes longitudinales et qui sont déployables radialement par emmanchement percutant du manchon extérieur (7) sur la portion à élargissement conique (5) du manchon intérieur (2), **caractérisée en ce que** les pattes expansibles (8) comportent des taillants en forme de burins (11) disposés sous forme annulaire, et une portion d'appui essentiellement cylindrique (6), dont le diamètre extérieur (w) est plus petit que le plus grand diamètre extérieur (d) de la portion à élargissement conique (5), est prévue à la suite de la portion à élargissement conique (5) du manchon intérieur (2).

2. Cheville à enfoncer selon la revendication 1, **caractérisée en ce que** la portion d'appui (6) présente une longueur axiale (s) qui correspond environ à 2 fois à 5 fois l'épaisseur de paroi (b) du manchon extérieur (7).

3. Cheville à enfoncer selon la revendication 1 ou 2, **caractérisée en ce que** le diamètre extérieur (w) de la portion d'appui (6) correspond au diamètre extérieur du manchon intérieur (2) dans la zone arrière raccordée à la portion à élargissement conique (5).

4. Cheville à enfoncer selon une des revendications précédentes, **caractérisée en ce que** le manchon extérieur (7) présente un diamètre extérieur (a) qui correspond en grande partie au diamètre maximal (d) de la portion à élargissement conique (5) du manchon intérieur (2).

5. Cheville à enfoncer selon une des revendications précédentes, **caractérisée en ce que** la portion à élargissement conique (5) du manchon intérieur (2) possède une longueur (x) qui correspond à environ 2 fois à 4 fois l'épaisseur de paroi (b) du manchon extérieur (7) et un angle de conicité moyen (γ) d'environ 15° à environ 60°.

6. Cheville à enfoncer selon la revendication 5, **caractérisée en ce que** les pattes expansibles (8) présentent une longueur (1) qui correspond sensiblement à 2 fois à 4 fois l'épaisseur de paroi (b) du manchon extérieur (7).

7. Cheville à enfoncer selon une des revendications précédentes, **caractérisée en ce que** les taillants en forme de burins (11) sont délimités chacun par une face de dépouille (12) et par une face de burinage (13), lesquelles forment entre elles un angle de coupe (α) d'environ 30° à environ 90°, la face de dépouille (12) débouchant dans la surface extérieure de la patte expansible (8), et la face de burinage (13) s'étendant vers la face arrière de la patte expansible (8).

8. Cheville à enfoncer selon la revendication 7, **caractérisée en ce que** la face de dépouille (12) s'étend en biais selon un angle de burinage (β) d'environ 120° à environ 175° par rapport à l'axe longitudinal (A) du manchon extérieur (7).

9. Cheville à enfoncer selon une des revendications précédentes, **caractérisée en ce que** la surface extérieure des pattes expansibles (8) est conçue avec une concavité torique, respectivement sous forme d'ensellure.

10. Cheville à enfoncer selon une des revendications précédentes, **caractérisée en ce que** l'épaisseur de paroi (b) du manchon extérieur (7) est d'environ 1 mm à environ 3 mm.
